Europäisches Patentamt

European Patent Office

Office européen des brevets

(11) Veröffentlichungsnummer: **0 223 052**
**A1**

## (12) EUROPÄISCHE PATENTANMELDUNG

(21) Anmeldenummer: 86114082.0

(22) Anmeldetag: 10.10.86

(51) Int. Cl.⁴: **G11B 23/113**

(30) Priorität: 11.10.85 IT 2245285

(43) Veröffentlichungstag der Anmeldung:
27.05.87 Patentblatt 87/22

(84) Benannte Vertragsstaaten:
AT BE CH DE ES FR GB LI

(71) Anmelder: **ROBOTECNICA S.r.l.**
**Via Clerici, 2/4**
**20099 Sesto San Giovani (MI)(IT)**

(72) Erfinder: **Bosco, Angelo**
**Via Kennedy, 27**
**I-20097 San Donato Milanese(IT)**
Erfinder: **Magnaghi, Edgardo**
**Via Veneto 11/3b San Bovio**
**I-20068 Peschiera Borromeo(IT)**

(74) Vertreter: **Vogl, Leo, Dipl.-Ing.**
**c/o AEG Aktiengesellschaft**
**Theodor-Stern-Kai 1**
**D-6000 Frankfurt am Main 70(DE)**

(54) **Vorrichtung für das Verbinden von fortlaufenden Bändern von unterschiedlichen Spulen.**

(57) Vorrichtung (10) für das Verbinden von fortlaufenden Bändern (25) von unterschiedlichen Spulen an einer Verbindungsvorrichtung, die hauptsächlich aus Elementen (12,13) in Form einer Trommel bestehen, die mit Führungen (20) und Saugblaskanälen (18,19) ausgestattet sind, wobei ein Element (12) drehbar und das andere (13) fest angebracht ist. Die Vorrichtung verfügt außerdem über Klingen (24,35), die automatisch oder auch nicht betätigt werden können, um die bandförmigen Elemente (25) zu - schneiden, wenn es während der Bearbeitung notwendig wird.

Fig.1

EP 0 223 052 A1

## Vorrichtung für das Verbinden von fortlaufenden Bändern von unterschiedlichen Spulen

Die vorliegende Erfindung betrifft eine Vorrichtung für das Verbinden von fortlaufenden Bändern von unterschiedlichen Spulen.

Bei den automatischen Maschinen zum Laden von Magnetband auf Kassette existiert das Problem des Austausches der Spule zur Einspeisung des Bandes, wobei die Maschine in Funktion bleibt, ohne daß man dieselbe anhalten muß, was Leerzeiten oder Arbeitsunterbrechungen hervorruft.

Im Moment werden diese Operationen manuell getätigt, was Leerzeiten zur Folge hat und ständig eine Bedienungsperson erfordert.

Zweck der vorliegenden Erfindung ist es, die zitierten Nachteile zu vermeiden, durch Schaffung einer Vorrichtung die in der Lage ist, fortlaufende Bänder, die von mehreren Spulen kommen, an einem Klebapparat so in Position zu bringen, daß ihre Verbindung gemäß einer festgelegten Arbeitsfolge erfolgen kann.

Gegenstand der vorliegenden Erfindung ist eine Vorrichtung die das Zuführen von fortlaufenden Bändern zu einer Verbindungsvorrichtung ermöglicht . Dies wird dadurch erreicht, daß ein erstes und zweites Element angeordnet ist, die durch eine durchgehende Welle verbunden sind, wobei das erste Element um besagte Welle drehbar ist und das zweite El ement fest auf einer Basis sitzt; in den genannten ersten und zweiten Element sind außerdem Kanäle und Röhren vorgesehen, die unabhängig auf der äußeren Oberfläche der Führungen für die fortlaufenden Bänder enden, und die mit einem Saug-Blassystem verbunden sind, das alternierend für das Zurückhalten oder den Vorlauf der Bänder sorgt.

Die wesentlichen Teile der Konstruktion und die Vorteile der Erfindung sind in der folgenden Beschreibung der beiliegendenden Zeichnungen dargelegt:

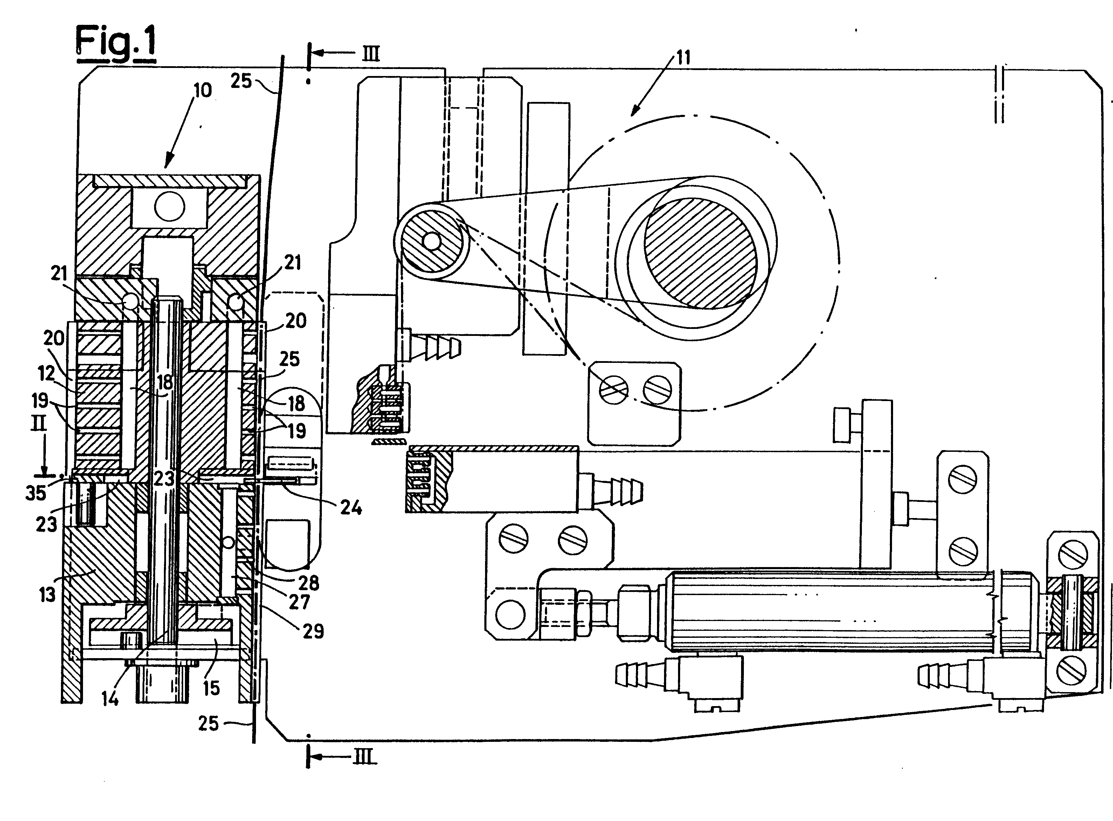

Abb. 1 ist eine Schnittansicht der Vorrichtung von oben,

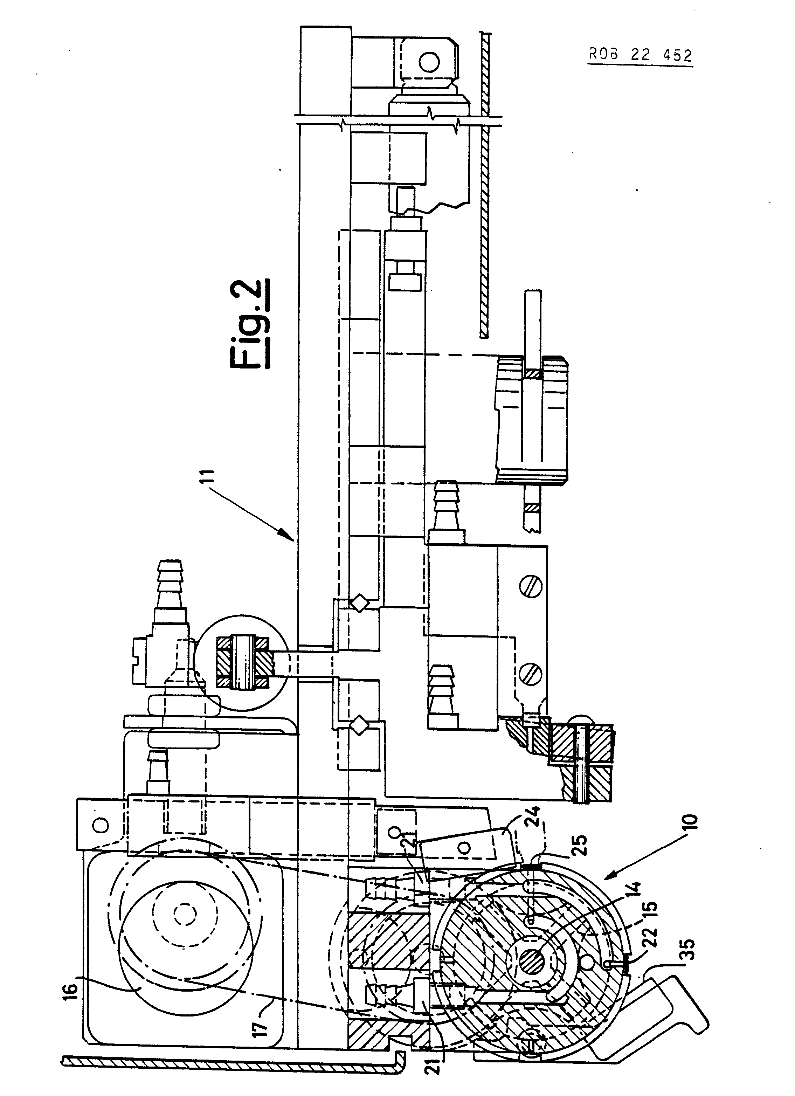

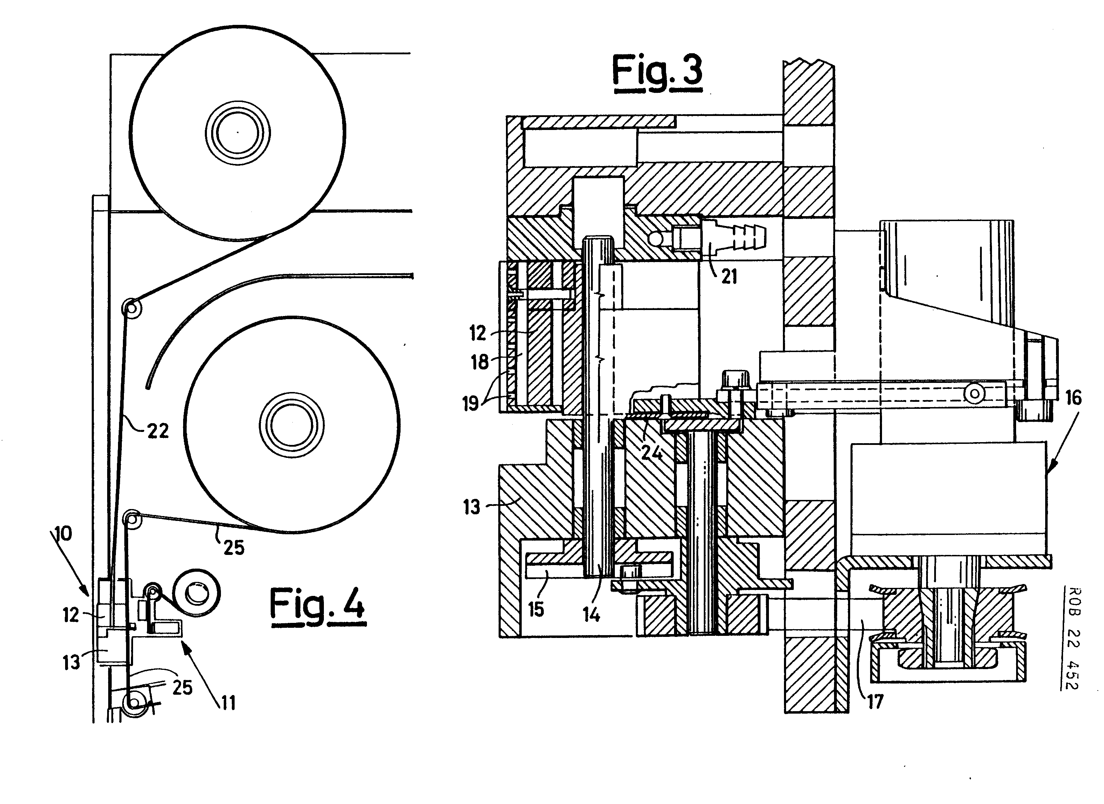

Abb. 2 ist eine Ansicht gem. der Linie II-II der Abb. 1

Abb. 4 ist eine schematische Ansicht der Vorrichtung gem. der Erfindung.

In der Zeichnung ist mit 10 eine Vorrichtung gemäß der Erfindung in ihrer Gesamtheit bezeichnet (in Fig. 4 dargestellt). Daneben eine Verbindungsvorrichtung (Klebevorrichtung), die als Komplex mit 11 bezeichnet ist, angeordnet die in der Praxis auch durch jede andere Verbindungsvorrichtung ersetzt werden kann.

Die Vorrichtung 10 besteht aus einem beweglichen Element 12, das mit einem festangeordneten zweiten Element (13) verbunden ist.

Die Elemente 12 und 13 sind durch eine Welle 14 verbunden auf der das Element 12, durch geeignete Mittel zur Drehung gebracht werden. In der bevorzugten Ausführungsform bestehen die geeigneten Mittel aus einem Stellrad 15, das mittels eines Übertragungsriemens 17 mit einer Antriebswelle 16 verbunden ist. Diese Teile bewirken über die Welle 14 eine Drehung des Elementes 12 um 90°, wenn diese Drehung erforderlich wird.

Auf dem Element 12 sind außerdem innere Kanäle 18 vorgesehen, von denen sich Nebenkanäle 19, die in die Führungen 20 münden, erstrecken. Die Kanäle 18 sind durch Passagen 21 mit einem unabhängigen Saugblassystem verbunden, das bewirkt, daß ein Teil des Bandes 22 mit der Führung 20 in Kontakt bleibt, wenn es still steht, während es während der Arbeitsphase auf einem Luftkissen läuft. Außerdem ist das Element 12, gemäß der Erfindung, an seiner Unterseite mit einer ersten Klinge 35 für den manuellen Schnitt des Bandes 22 versehen, das in der Führung 20 liegen muß. Die Klinge 35 steht in Korrespondenz mit einem ringförmigen Schlitz 23, der am feststehenden Element 13 angeordnet ist.

An seiner Oberseite ist beim Element 13 eine zweite Klinge 24 vorgesehen, die automatisch auf Befehl einer Steuereinheit (nicht/dargestellt) betätigt wird. Diese zweite Klinge 24 schneidet das Band 25 in Korrespondenz mit dem ringförmigen Schlitz 23, der vor der festen Trommel 13 liegt. Auch das feststehende Element verfügt über Kanäle 27 mit diesbezüglichen Nebenkanälen 28, die in einer Führung 29 enden, in der das Band 25 läuft, und die mit einem Saugblassystem verbunden sind.

Um die Funktion der erfindungsgemäßen Vorrichtung und die Vorteile besser zu erläutern, wird die Vorrichtung an Hand einer Maschine für das Laden von Magnetband in Kassetten dargelegt.

Um eine solche Maschine besser ausnutzen zu können, ist es generell notwendig, zwei Magnetbandspulen für die Einspeisunng vorzusehen. Das für das Laden der Kassetten erforderliche Band 25 wird von einer der Spulen abgenommen. Es passiert das bewegliche Element 12 und das feste 13, auf einem Luftkissen schwebend, das von den Kanälen 19 und 28 erzeugt wird.

Während der Bearbeitung wird das Band 25, bevor es auf der Spule zu Ende geht, angehalten, während es in Kontakt mit den Elementen 12 und 13 durch diese Phase durch die Kanäle 19 und 28 angesaugte Luft gehalten wird, wird es von der Klinge 24 abgeschnitten.

Anschließend wird der Teil des Bandes, das mit der Einspeisungsspule verbunden ist, wieder aufgewickelt. Nach dem Aufwickeln dieses Teils des Bandes, tritt das Element 12 in Funktion, das durch den Mechanismus des Stellrads 15 und der Welle 14 um 90° dreht. Hierdurch wird das Ende des Bandess 22, das von einer zweiten geladenen Einspeisungsspule kommt, Kopf an Kopf mit dem Ende des Bandes 25, das auf dem festen Element 13 geblieben ist, in Verbindung gebracht. Um die feste Verbindung herzustellen, tritt eine mit 11 bezeichnete Klebevorrichtung in Funktion und anschließend kann das Beladen der Kassetten normal weiterlaufen.

Aus dieser Arbeitsweise wird klar, daß die Leerlaufzeiten beachtlich reduziert werden, da es nicht mehr erforderlich ist, eine neue Spule zu montieren und das Band in seine Führung einzulegen.

Es ist zu bemerken, daß die vorliegende Erfindung mit jeder möglichen Verbindungsvorrichtung gekoppelt und generell für die Bearbeitung oder das Laden eines jeglichen Typs von fortlaufenden Bändern benutzt werden kann.

**Ansprüche**

1. Vorrichtung für das Verdrehen von fortlaufenden Bändern von unterschiedlichen Spulen an einer Verbindungsvorrichtung, dadurch gekennzeichnet, daß ein erstes und zweites Element (12, 13) angeordnet sind, die durch eine durchgehende Welle (14) verbunden sind, wobei erstes Element (12) um besagte Welle drehbar ist und das zweite Element (13) fest angeordnet ruht. Beide Elemente weisen außerdem innere Kanäle (19, 28) und Nebenkanäle (27) auf, die unabhängig von einer auf der äußeren Oberfläche der Führungen für die fortlaufenden Bänder enden, mit einem Saugblassystem verbunden sind. das alternierend für das Anpreßen oder das Abheben für den Lauf des Bandes sorgt.

2. Vorrichtung gemäß Anspruch 1, dadurch gekennzeichnet, daß wenigstens einer der Kanäle Luft von außen ansaugt, während ein anderer Kanal entweder blasen oder ansaugen kann.

3. Vorrichtung gemäß Anspruch 1 bis 2, dadurch gekennzeichnet, daß unter und über dem ersten und zweiten Element eine erste und zweite Klinge für den Schritt des fotrlaufenden Bandes vorgesehen ist, wobei mindestens die zweite Klinge automatisch betätigt wird.

4. Vorrichtung nach Anspruch 1 bis 3, dadurch gekennzeichnet, daß das erste Element (12) mittels eines Stellrads (15) drehbar ist, das über einen Treibriemen (17) mit einem Motorenantrieb (16) verbunden ist und von ihm angetrieben wird.

Fig.1

0 223 052

ROB 22 452

Fig.2

16

17

21

21

24

25

22 15 14

35

10

11

0 223 052

ROB 22 452

61

ROB 22 452

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | EP-A-0 152 641 (PHILIPS)<br>* Anspruch 1, Figuren 3, 4 *<br><br>--- | 1 | G 11 B 23/113 |
| Y | DE-A-3 346 837 (FUJI PHOTO FILM)<br>* Seite 5, Zeile 28 - Seite 6, Zeile 25; Seite 12, Zeilen 3-19 *<br><br>--- | 1 | |
| A | FR-A-2 306 502 (TOKYO DENKI)<br>* Seite 13, Zeile 1 - Seite 14, Zeile 14; Figuren 11, 12 *<br><br>--- | 1 | |
| A | GB-A-2 107 075 (KING INSTRUMENT CORP.)<br>* Anspruch 1, Figuren 1-5 *<br><br>--- | | |
| A | DE-A-2 361 456 (KING INSTRUMENT CORP.)<br>* Anspruch 1, Figuren 2, 3 *<br><br>----- | | |

RECHERCHIERTE SACHGEBIETE (Int. Cl.4)

G 11 B 15/66
G 11 B 23/00
B 65 H 19/00
B 65 H 21/00

Der vorliegende Recherchenbericht wurde für alle Patentansprüche erstellt.

| Recherchenort | Abschlußdatum der Recherche | Prüfer |
|---|---|---|
| BERLIN | 12-01-1987 | ROGNONI M.G.L. |